# FASCICULE DE BREVET EUROPEEN

(11) **EP 1 864 027 B1**
(45) Date de publication et mention de la délivrance du brevet: **30.01.2013**
(21) Numéro de dépôt: 06743790.5
(22) Date de dépôt: 30.03.2006
(51) Int. Cl.: F16C 7/02, F01L 1/14

(54) **BIELLE STRUCTURALE CREUSE ET PROCEDE DE FABRICATION D'UNE TELLE BIELLE**
HOHLSTRUKTURSTANGE UND HERSTELLUNGSVERFAHREN DAFÜR
HOLLOW STRUCTURAL ROD AND PRODUCTION METHOD THEREOF

(30) Priorité: 31.03.2005 FR 0550840
(43) Date de publication de la demande: 12.12.2007
(73) Titulaire: AIRBUS OPERATIONS, 31060 Toulouse (FR); ROXEL France, 33160 Saint Médard en Jalles (FR)
(72) Inventeur: AUDART-NOEL, Virginie, F-32600 Pujaudran (FR); CANADAS, Marc, F-31200 Toulouse (FR); GRELIER, Alain, F-45510 Tigy (FR); AUDRI, Daniel, F-41600 Lamotte Beuvron (FR)
(74) Mandataire: Poulin, Gérard
(86) Numéro de dépôt international: PCT/FR2006/050273
(87) Numéro de publication internationale: WO 2006/103372

(56) Documents cités:
- DE-A1- 19 532 953
- DE-C1- 19 744 713
- FR-A- 1 452 811
- FR-A- 2 541 604
- US-A- 4 850 315
- US-A1- 2003 024 494
- US-B1- 6 349 615

## Description

### DOMAINE TECHNIQUE

L'invention concerne un procédé de fabrication d'une bielle structurale creuse susceptible de reprendre des efforts de poussée d'un système de montage destiné à être interposé entre un mât d'accrochage de moteur d'aéronef et un moteur, ce système de montage comprenant une pluralité d'attaches moteur ainsi que des bielles de reprise des efforts de poussée engendrés par le moteur ainsi des bielles de reprise des efforts de poussée engendrés par ledit moteur.

### ÉTAT DE LA TECHNIQUE ANTÉRIEURE

De l'art antérieur, on connaît, voir préambule de la revendication 1, diverses formes de réalisation pour ces bielles structurales creuses destinées à être utilisées dans des structures complexes à environnement thermique élevé telles que celles des systèmes de montage moteur pour aéronef, ces bielles comportant globalement, dans leur état final, deux embouts séparés par une portion principale creuse.

Dans un premier type de réalisation connu de l'art antérieur, la bielle en acier ou alliage métallique comprend un corps de bielle intégrant l'un des deux embouts d'accrochage, et définissant la quasi-totalité de la portion principale creuse. De plus, cette bielle comporte un autre élément constituant le second embout, ce dernier étant assemblé sur le corps de bielle, de préférence par un système de pas de vis, ou encore par une jonction vissée.

Dans cette configuration particulière de l'art antérieur où la bielle est obtenue par l'assemblage de deux éléments, l'élément constituant le corps de bielle représente habituellement environ 80% de la longueur totale de la bielle.

Dans un second type de réalisation connu de l'art antérieur, la bielle en acier ou alliage métallique comporte un corps de bielle généralement tubulaire et constituant la quasi-totalité de la portion principale creuse. En outre, elle intègre deux autres éléments constituant respectivement le premier et le second embout, chacun assemblé à l'une des extrémités du corps de bielle, de préférence par un système de pas de vis, par une jonction vissée, ou encore à l'aide d'une soudure circonférentielle réalisée par soudage laser, soudage à faisceau d'électrons, TIG/MIG, etc.

Dans ces deux types de réalisation connus de l'art antérieur, un inconvénient majeur réside dans le fait qu'il est nécessaire de prévoir une/deux jonctions au niveau des extrémités de la bielle qui se trouvent chacune dans un champ de contrainte non homogène. Ainsi, cette jonction doit alors être dimensionnée par le niveau de contrainte le plus élevé de ce champ, ce qui implique un surdimensionnement et donc des pertes inévitables de performance.

De plus, ce type de jonction surdimensionnée introduit inéluctablement une condition de surcontrainte locale qui est également préjudiciable aux performances globales de la bielle.

Pour ces bielles métalliques de l'art antérieur dimensionnées en contrainte et rigidité et étant destinées à être utilisées dans un environnement thermique élevé, un autre inconvénient non négligeable a également été décelé.

Cet inconvénient provient des techniques de fabrication utilisées qui conduisent toutes à l'obtention de bielles de forme cylindrique, habituellement de section circulaire, qui entraîne inévitablement un compromis de performance vis-à-vis de l'ensemble des critères de définition et des sollicitations mécaniques appliquées à ces bielles. En effet, si les formes cylindriques obtenues peuvent être optimisées vis-à-vis des sollicitations de traction, elles le sont en revanche plus difficilement vis-à-vis des sollicitations de compression et de flambage.

Enfin, la forme cylindrique creuse des bielles s'avère aussi difficilement optimisable au regard des réponses dynamiques de ces bielles, notamment en ce sens que le choix des fréquences propres, pour une longueur de bielle donnée, est uniquement défini par le diamètre extérieur et l'épaisseur de celle-ci.

### EXPOSÉ DE L'INVENTION

L'invention a donc pour but de fabriquer une bielle structurale creuse remédiant au moins partiellement aux inconvénients mentionnés ci-dessus relatifs aux réalisations de l'art antérieur.

Il est prévu que chacun des premier et second corps creux de la bielle selon l'invention est réalisé par fluotournage.

Cette technique de formage à froid par extrusion ponctuelle, où la perte de matière est quasiment nulle, confère des avantages significatifs aux bielles réalisées de telle sorte, qui entraînent notamment une hausse notable des performances de ces dernières.

Tout d'abord, il y a lieu d'indiquer que cette technique de déformation plastique du métal à froid permet d'obtenir, à un moindre coût, des corps de bielle de formes complexes pouvant alors facilement être totalement optimisées vis-à-vis des différents critères de sollicitations mécaniques telles que la traction, la compression, le flambage, l'excitation dynamique, etc.

De plus, cette technique particulière permet d'augmenter sensiblement les caractéristiques mécaniques du matériau par écrouissage, notamment en ce qui concerne la dureté et la résistance. Les gains en termes d'accroissement des caractéristiques mécaniques peuvent s'élever jusqu'à environ 15 à 20%.

Si cette technique préférée pour la réalisation des corps creux peut éventuellement être remplacée par une méthode classique d'usinage au tour, il est noté que cette technique de fluotournage est retenue pour l'amélioration globale qu'elle est susceptible de procurer, notamment en ce qui concerne le respect de la géométrie des bielles, la résistance de la matière, la masse, la qualité, ainsi que les coûts générés.

Enfin, il est également précisé que la réalisation des corps creux par fluotournage s'effectue à partir de préformes disposant d'une longueur plus faible que la longueur finale de ces corps creux. Ainsi, cette technique favorise effectivement la facilité d'accès pour les moyens d'usinage destinés à être introduits dans la préforme dans le but d'optimiser la forme de la partie interne de la future zone de transition, en vue d'obtenir une continuité structurale très satisfaisante au niveau de cette zone de transition établissant au final la jonction entre les deux parties constitutives de chaque élément de bielle.

De préférence, la jonction entre les corps creux des deux éléments de bielle est une soudure, par exemple réalisée par friction. A cet égard, il est noté que la forme de demi-bielle que présente chacun des deux éléments de bielle à raccorder est particulièrement propice à la réalisation d'une telle soudure circonférentielle par friction, qui est actuellement reconnue comme présentant un niveau de performance inégalé.

Toujours de manière préférentielle, les premier et second corps creux, formant conjointement la portion principale creuse de la bielle, présentent chacun une extrémité de jonction présentant une surépaisseur de matière. Ainsi, ce renforcement structural apporté localement à chacun des deux corps creux permet d'abaisser la contrainte passante au niveau de compatibilité de la structure intégrant la bielle.

De préférence, les premier et second corps creux présentent chacun une surface interne cylindrique, ainsi qu'une surface externe cylindrique.

Une autre possibilité réside dans le fait de prévoir que les premier et second corps creux présentent chacun une surface interne cylindrique, ainsi qu'une surface externe non cylindrique, par exemple de forme sensiblement tronconique, facilement réalisable à l'aide de la technique de fluotournage.

Naturellement, sans sortir du cadre de l'invention, toute autre forme complexe peut être envisagée pour la surface externe des corps creux, notamment de façon à ce que celle-ci soit totalement optimisée vis-à-vis des différents critères de sollicitations mécaniques telles que la traction, la compression, le flambage, l'excitation dynamique, etc.

De manière préférée, les premier et second éléments de bielle présentent chacun une zone de transition de forme extérieure tronconique entre le corps creux et l'embout concernés. Il est précisé que cette forme spécifique est retenue de façon à minimiser l'état de surcontrainte locale au niveau de cette zone de transition.

D'autre part, on peut simultanément ou indépendamment prévoir que la zone de transition comprend un évidement pratiqué dans une face latérale interne du corps creux délimitant un espace vide de ce dernier, l'évidement pratiqué se trouvant alors dans une section non travaillante.

L'invention a donc pour objet un procédé de fabrication d'une telle bielle structurale creuse, comportant les étapes suivantes :
- fabrication d'une préforme du premier élément de bielle ainsi que d'une préforme du second élément de bielle ;
- réalisation par fluotournage des premier et second corps creux, respectivement à partir des deux préformes ; et
- assemblage des premier et second corps creux l'un avec l'autre.

Préférentiellement, l'étape d'assemblage des premier et second corps creux l'un avec l'autre est réalisée par soudage, par exemple par soudage par friction.

De façon préférée, l'étape de fabrication des deux préformes est réalisée de manière à ce que chacune d'elles présente, au niveau d'une extrémité de jonction, une surépaisseur de matière, dans le but que celui-ci constitue le renforcement structural précité. Dans un tel cas, il est possible de prévoir que cet ajout de matière ne soit pas affecté par l'étape de réalisation par fluotournage des premier et second corps creux, de manière à ce que cette surépaisseur de matière conserve ses caractéristiques mécaniques souhaitables à la jonction.

L'étape de fabrication des deux préformes est réalisée de manière à ce que chacune d'elles présente une surface interne cylindrique dans laquelle peut être inséré un mandrin tournant lors de l'étape de réalisation par fluotournage des premier et second corps creux.

En outre, l'étape de réalisation par fluotournage des premier et second corps creux à partir des préformes est réalisée de sorte que chacun d'eux dispose au choix d'une surface externe cylindrique ou non cylindrique. Dans ce dernier cas, à titre d'exemple illustratif, la forme sensiblement tronconique peut être retenue.

De préférence, l'étape d'assemblage des premier et second corps creux l'un avec l'autre est suivie d'une étape de réalisation par usinage des premier et second embouts, ces usinages étant pratiqués dans une portion d'embout de chacune des préformes.

A ce titre, l'étape de réalisation par usinage des premier et second embouts est réalisée de manière à ce que les premier et second éléments de bielle présentent chacun une zone de transition de forme extérieure tronconique entre le corps creux et l'embout concernés.

D'autre part, le procédé comporte pour chacun des deux éléments de bielle, avant l'étape d'assemblage des premier et second corps creux l'un avec l'autre, et de préférence avant l'étape de réalisation par fluotournage des premier et second corps creux, une étape de réalisation par usinage d'un évidement dans une face latérale interne d'une portion de corps creux de la préforme, cette face latérale délimitant un espace vide de cette portion de corps creux.

Enfin, il est précisé que les étapes de fabrication des deux préformes sont chacune de préférence réalisées à partir d'un élément plein de forme cylindrique.

D'autres avantages de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'une bielle structurale creuse selon un mode de réalisation préféré de la présente invention ;
- la figure 2 représente une vue en coupe longitudinale de la bielle montrée sur la figure 1 ;
- les figures 3a à 3g schématisent des étapes successives d'un procédé selon un mode de réalisation préféré de la présente invention, visant à fabriquer la bielle structurale creuse montrée sur les figures 1 et 2 ;
- la figure 4 représente une vue en perspective d'une bielle structurale creuse selon un autre mode de réalisation préféré de la présente invention ; et
- la figure 5 représente un système de montage destiné à être interposé entre un mât d'accrochage de moteur d'aéronef et un moteur, ce système se présentant sous la forme d'un mode de réalisation préféré de la présente invention et intégrant des bielles telles que celle montrée sur les figures 1 et 2.

### EXPOSÉ DÉTAILLÉ DE MODES DE RÉALISATION PRÉFÉRÉS

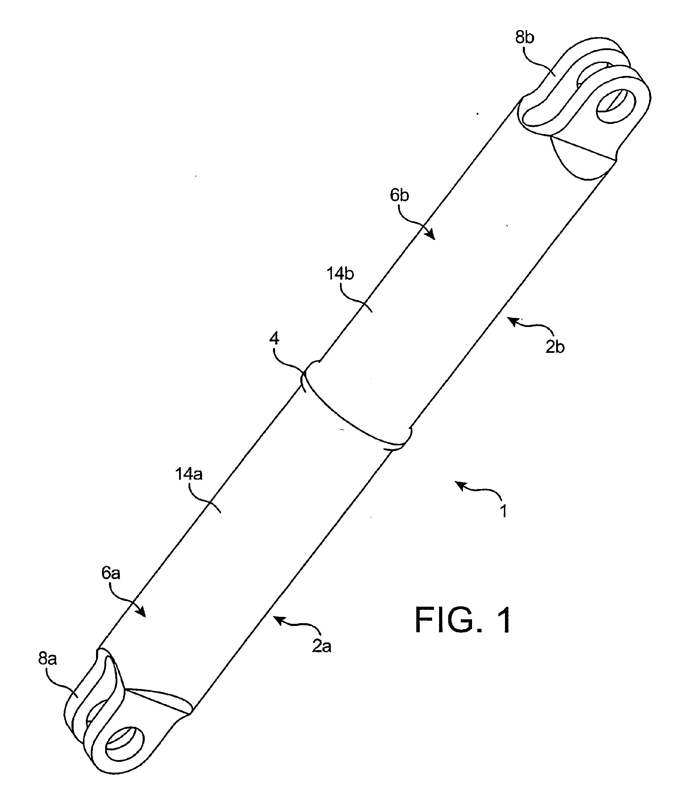

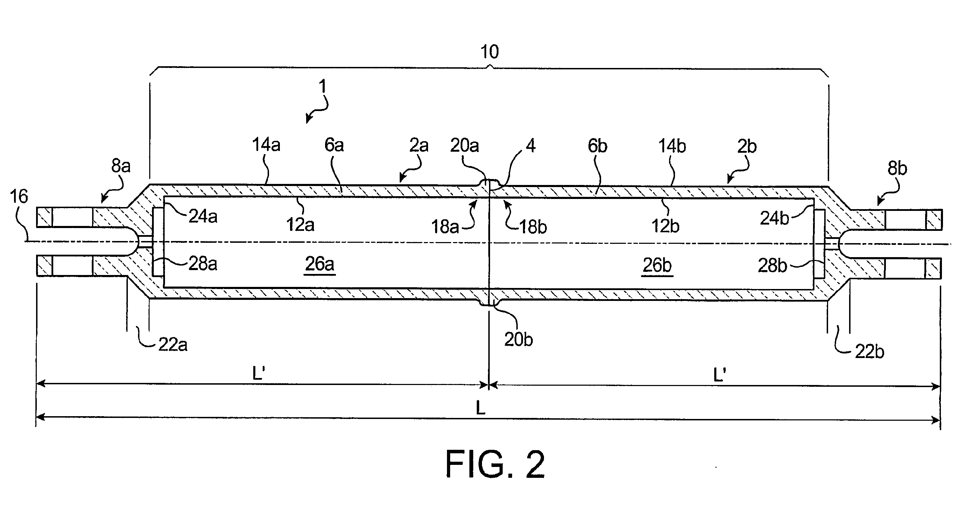

Tout d'abord en référence conjointement aux figures 1 et 2, on peut apercevoir une bielle structurale creuse 1 selon un mode de réalisation préféré de la présente invention, de préférence mais non exclusivement destinée à être utilisée au sein d'un système de montage interposé entre un mât d'accrochage de moteur d'aéronef et un moteur.

La bielle 1 comporte globalement un premier identiques, constituant respectivement deux demi-bielles. Ces deux éléments de bielle 2a, 2b, raccordés solidairement par une jonction 4, présentent respectivement un premier et un second corps creux 6a, 6b, chacun de ces corps 6a, 6b étant réalisé d'un seul tenant respectivement avec le premier embout 8a et le second embout 8b.

Les deux éléments de bielle 2a, 2b, formant conjointement une partie principale creuse 10 de la bielle 1 et réalisés de préférence par fluotournage, présentent donc chacun une longueur L' correspondant à la moitié de la longueur totale L de cette bielle 1, impliquant que la jonction 4 se trouve à mi-longueur de celle-ci.

Dans ce mode de réalisation préféré de la présente invention, le corps creux 6a présente une surface interne cylindrique 12a disposant préférentiellement d'une section circulaire, ainsi qu'une surface externe cylindrique 14a, de préférence également de section circulaire, chacune de ces surfaces 12a, 14a étant agencée selon un même axe longitudinal 16 de la bielle 1.

Comme on le voit le mieux sur la figure 2, le corps creux 6a dispose d'une extrémité de jonction 18a en contact avec la jonction 4 et intégrant une surépaisseur de matière 20a, cette surépaisseur 20a permettant ainsi d'apporter un renforcement structural local pour la bielle 1.

Le premier embout 8a peut disposer de toute forme classique et connue de l'homme du métier, telle que celle d'un embout à deux têtes percées comme cela est représenté sur les figures. Sa réalisation s'effectue préférentiellement par usinage.

Le premier élément de bielle 2a est pourvu d'une zone de transition 22a située entre le premier embout 8a et le premier corps creux 6a, cette zone 22a étant réalisée de manière à présenter une forme extérieure tronconique, dans le but de diminuer au mieux l'état de surcontrainte locale au niveau de cette zone de transition 22a. Par ailleurs, au niveau d'une partie interne de cette zone 22a, c'est-à-dire au niveau d'une face latérale interne 24a du corps 6a délimitant un espace vide 26a et étant sensiblement orthogonale à l'axe 16, il est pratiqué un évidement 28a qui prend également une forme cylindrique de section circulaire, agencée selon ce même axe longitudinal 16.

De façon analogue à celle exposée ci-dessus, le second corps creux 6b présente une surface interne cylindrique 12b ainsi qu'une surface externe cylindrique 14b disposant chacune d'une section circulaire, ces surfaces 12b, 14b étant aussi agencées selon l'axe longitudinal 16 de la bielle 1.

D'autre part, le second corps creux 6b dispose d'une extrémité de jonction 18b en contact avec la jonction 4 et intégrant une surépaisseur de matière 20b dans le but de créer un renforcement structural local pour la bielle 1.

Ici encore, le second élément de bielle 2b est pourvu d'une zone de transition 22b située entre le second embout 8b et le second corps creux 6b, cette zone 22b étant réalisée de manière à présenter une forme extérieure tronconique aux fins précitées. En outre, au niveau d'une partie interne de cette zone 22b, c'est-à-dire au niveau d'une face latérale interne 24b du corps 6b délimitant un espace vide 26b et étant sensiblement orthogonale à l'axe 16, il est pratiqué un évidement 28b qui prend également une forme cylindrique de section circulaire, agencée selon ce même axe longitudinal 16.

La jonction 4 prend la forme d'une soudure circonférentielle joignant les deux extrémités de jonction 18a, 18b portant les deux surépaisseurs de matière 20a, 20b, et se situe globalement dans un plan médian de la bielle 1 correspondant également à un plain de symétrie transversal pour cette dernière.

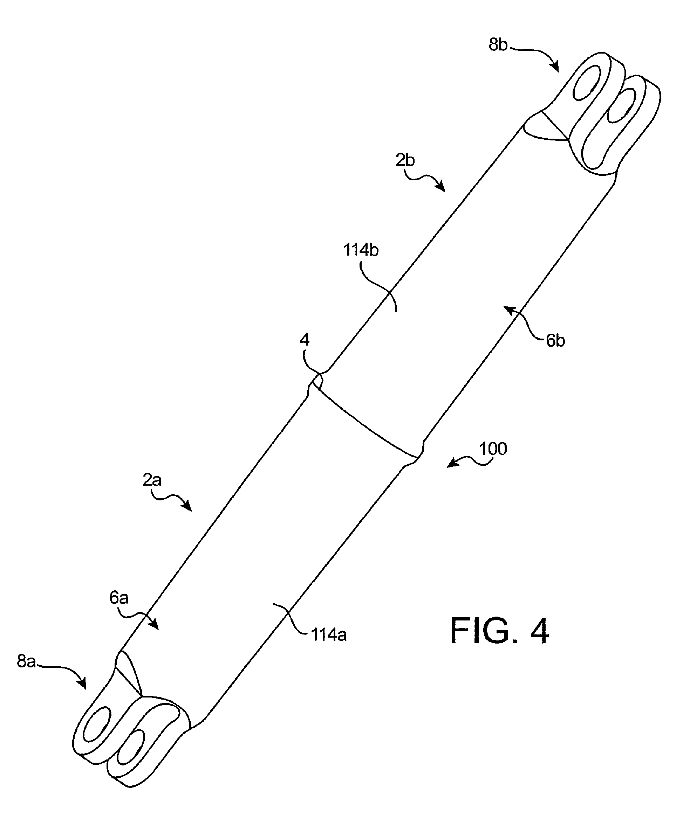

En référence à la figure 4, une bielle structurale creuse 100 se trouve représentée sous la forme d'un autre mode de réalisation préféré de la présente invention.

Cette bielle 100 est sensiblement similaire à celle montrée sur les figures 1 et 2 et décrite ci-dessus. A cet égard, sur les figures, les éléments portant les mêmes références numériques correspondent donc à des éléments identiques ou similaires.

Ainsi, on peut s'apercevoir que la seule différence entre les bielles 1 et 100 réside dans la forme de la surface externe 114a, 114b des premier et second corps creux 6a, 6b.

En effet, ces surfaces 114a, 114b ne sont plus cylindriques comme les surfaces 14a, 14b mentionnées précédemment, mais disposent d'une forme complexe de manière à être totalement optimisées vis-à-vis des différents critères de sollicitations mécaniques telles que la traction, la compression, le flambage, l'excitation dynamique, etc. La forme représentée sur la figure 4 correspond à titre d'exemple indicatif à une forme sensiblement tronconique, dont la section s'agrandit en allant vers la soudure 4. Bien entendu, il est ici également possible de conserver les surépaisseurs de matière 20a, 20b au niveau des extrémités de jonction 18a, 18b, toujours de façon à procurer des renforcements locaux de structure pour la bielle 1.

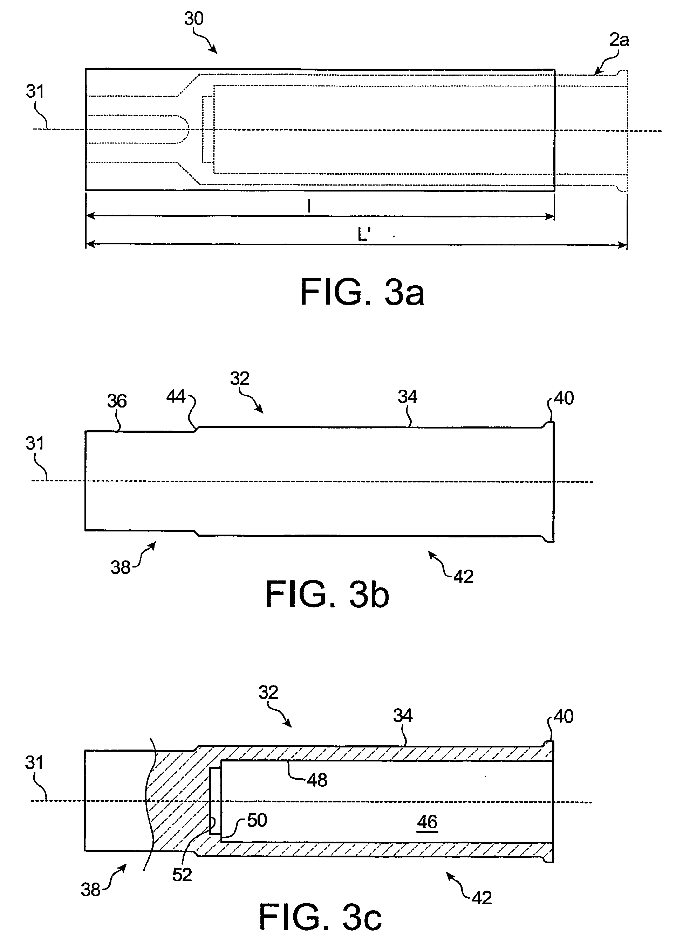

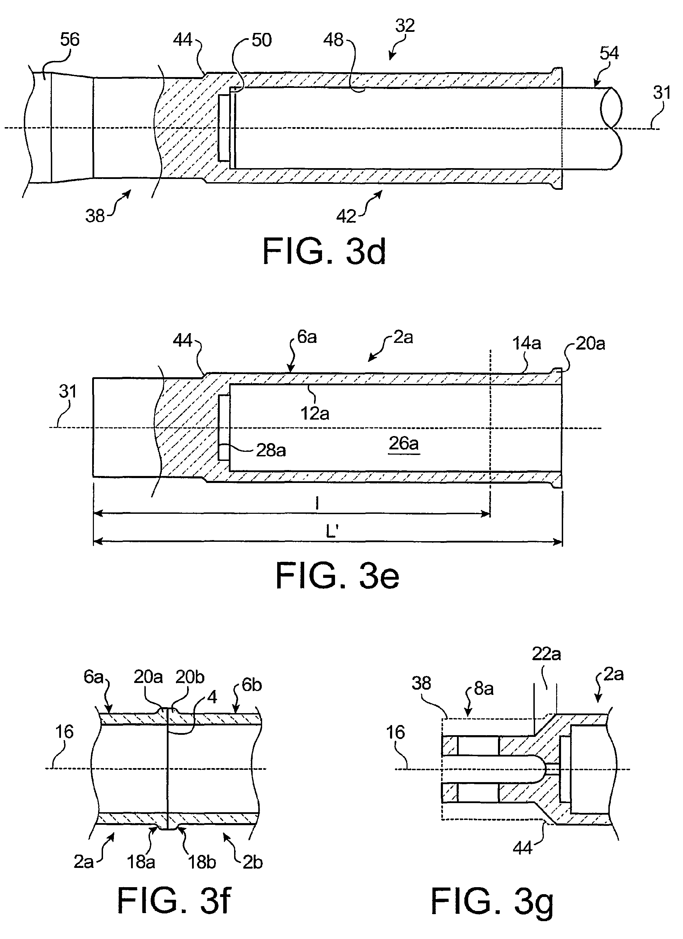

En référence à présent aux figures 3a à 3g, il va être décrit un procédé de fabrication de bielle selon un mode de réalisation préféré de la présente invention, ce procédé ayant pour but la fabrication de la bielle structurale creuse 1 représentée sur les figures 1 et 2.

Tout d'abord en référence aux figures 3a à 3e, il va être décrit les différentes étapes de réalisation du premier élément bielle 2a avant son raccordement solidaire avec le second élément de bielle 2b. A ce titre, il est noté que la manière d'obtenir le premier élément de bielle 2a montré sur la figure 3e s'applique de façon identique pour obtenir le second élément de bielle 2b. Pour cette raison, le processus d'obtention du second élément bielle 2b avant son raccordement solidaire avec le premier élément de bielle 2a ne sera pas davantage décrit. De plus, il est à comprendre que la réalisation des deux éléments de bielle 2a, 2b destinés à être raccordés ultérieurement peut donc être effectuée successivement ou simultanément, sans sortir du cadre de l'invention.

L'initiation de la fabrication de l'élément de bielle 2a s'effectue par le choix d'un élément plein 30 de forme cylindrique, de préférence de section circulaire d'axe longitudinal 31 comme cela est montré sur la figure 3a, dont les dimensions conviennent à la réalisation de l'élément 2a souhaité. Cet élément plein 30 est de préférence réalisé en acier ou en alliage métallique. Pour des raisons de compréhension de l'invention, l'élément de bielle 2a dans son état fini a été représenté en pointillés sur la figure 3a, ce qui permet dors et déjà de constater que l'élément plein 30 de longueur initiale 1, va subir, au cours de la mise en oeuvre du procédé, une extension de sa longueur lui permettant d'atteindre la longueur L' correspondant à la longueur finale de l'élément de bielle 2a.

L'étape suivante consiste en la réalisation de la préforme 32 du premier élément de bielle 2a, par exemple par usinage au tour conventionnel de l'élément plein 30, visant à faire apparaître une surface externe cylindrique de section circulaire 34 de part et d'autre de laquelle se situent respectivement une section 36 de diamètre inférieur au niveau d'une portion d'embout 38 de la préforme 32, ainsi qu'une section 40 de diamètre plus important au niveau de l'extrémité libre de jonction d'une portion de corps creux 42 de cette même préforme 32.

A titre indicatif, il est précisé que la section 40 peut être conservée sans subir de modification jusqu'à l'assemblage des deux éléments de bielle 2a, 2b, c'est-à-dire être conservée en l'état montré sur la figure 3b sans être affecté par l'étape de fluotournage qui sera décrite ci-après.

D'autre part, la section 36 de diamètre inférieur pratiquée au niveau de la portion d'embout 38 de la préforme 32 est essentiellement prévue pour faire apparaître une rupture de niveau 44 entre cette section 36 et la surface externe 34, cette rupture de niveau étant facilement capable d'être engagée par des molettes de l'appareillage utilisé pour la mise en oeuvre de l'étape de fluotournage.

En référence à la figure 3c, la portion de corps creux 42 subit ensuite un autre usinage visant à faire apparaître un espace vide 46 délimité par une surface interne cylindrique de section circulaire 48 et d'axe longitudinal 31. En outre, si cet espace vide 46 est ouvert du côté de l'extrémité libre de jonction de la portion de corps creux 42, il est néanmoins limité à l'opposé de cette extrémité par une face latérale interne 50 orthogonale à l'axe 31 et située approximativement au niveau de la jonction entre les portions d'embout 38 et de corps creux 42 de la préforme 32.

Sur cette face latérale interne 50, il est pratiqué un évidement 52 qui prend également une forme cylindrique de section circulaire, agencée selon ce même axe longitudinal 31.

A ce stade précédant l'étape de fluotournage, il convient de noter que l'usinage de la portion d'embout 38 n'a préférentiellement pas encore été réalisé, et que le portion de corps creux 42 est naturellement dimensionnée en fonction du volume de matière nécessaire à la réalisation du corps creux 6a de l'élément de bielle 2a. Par ailleurs, il est également précisé que le diamètre de la surface cylindrique 48 dispose d'un diamètre identique à celui prévu pour la surface interne cylindrique 12a du corps creux 6a à fabriquer.

Le premier corps creux 6a est alors réalisé à partir de la préforme 32, par fluotournage comme le montre schématiquement la figure 3d.

Pour ce faire, un mandrin tournant de fluotour 54, de diamètre sensiblement identique à celui de la surface interne cylindrique 48, est inséré dans l'espace 46 afin de combler ce dernier, jusqu'à venir au contact de la surface latérale 50. Une contrepointe 56 en contact extérieur avec la portion d'embout 38 applique la pression nécessaire d'une part au maintien de la préforme 32 sur le mandrin 54, et d'autre part à l'entraînement en rotation de cette préforme 32.

A la fin de cette étape de fluotournage réalisée de manière conventionnelle et dans le but de repousser la matière de la rupture de niveau 44 vers l'extrémité de jonction de la portion de corps creux 42, on obtient alors le premier élément de bielle 2a d'axe longitudinal 31 et muni de son corps de bielle 6a présentant la surface externe 14a de la forme souhaitée, à savoir ici de forme cylindrique et de section circulaire.

Comme le montre la figure 3e comparant schématiquement les deux longueurs L' et 1, on peut apercevoir que l'étape de fluotournage a entraîné un allongement ainsi qu'une diminution de l'épaisseur de la portion de corps creux 42 pour former le corps creux 6a, tandis que la portion d'embout 38 n'a quant à elle subi aucun modification lors de cette étape. Il est noté que cette étape peut par exemple être conduite en deux passes, de manière à apporter un taux de retreint pouvant s'élever à 80% ((épaisseur initiale - épaisseur finale) / épaisseur initiale), ainsi qu'une augmentation de la résistance mécanique par écrouissage de l'ordre de 15 à 20%.

A l'issue de l'étape de fluotournage, la surface interne cylindrique 48 de la préforme 32 s'est donc transformée pour donner la surface cylindrique 12a de même diamètre et de longueur accrue, et définissant l'espace vide 26a. D'autre part, la forme de l'évidement 52 de la préforme 32 n'a pas été modifiée, et ce dernier correspond à présent à l'évidement 28a du corps creux 6a. De façon analogue et comme mentionné précédemment, la section 40 a été conservée sans subir de modification, et correspond à présent à la surépaisseur de matière 20a.

Une fois que les deux éléments de bielle 2a et 2b sont obtenus de la façon exposée ci-dessus, et qu'ils se trouvent donc chacun dans une forme identique à celle montrée sur la figure 3e, il est procédé à une étape d'assemblage des premier et second corps creux 6a, 6b de ces éléments de bielle 2a, 2b, de préférence par soudage, et encore plus préférentiellement par soudage par friction. Ainsi, la jonction 4 précitée apparaît en prenant la forme d'une soudure circonférentielle joignant les deux extrémités de jonction 18a, 18b portant les deux surépaisseurs de matière 20a, 20b, cette jonction 4 étant alors en mesure de procurer des niveaux de performances très élevés.

Un autre avantage découlant de la façon d'opérer réside dans le fait que les deux éléments de bielle 2a, 2b à assembler par soudage par friction ne nécessitent pas de subir un indexage angulaire avant le soudage par friction, étant donné que leurs embouts respectifs 8a, 8b n'ont pas encore été usinés. Il suffit donc de prévoir qu'à l'issue de cette étape d'assemblage des deux corps creux 6a, 6b, les deux éléments de bielle 2a, 2b soient disposés coaxialement selon l'axe 16 confondu avec les deux axes longitudinaux 31 de ces deux éléments de bielle.

Par ailleurs, il est noté que si la technique de soudage par friction est effectivement préférée, d'autres techniques d'assemblage connues de l'homme du métier sont également envisagées sans sortir du cadre de l'invention, telles que le soudage laser, le soudage à faisceau d'électrons, le soudage TIG/MIG, etc.

Ensuite, comme le montre la figure 3g pour le premier élément de bielle 2a, la portion d'embout 38 schématisée en pointillés subit une opération d'usinage de manière à faire apparaître l'embout 8a de la forme souhaitée, cette opération d'usinage pouvant par exemple être effectuée à l'aide d'une fraiseuse à commande numérique. Par ailleurs, durant cette étape d'usinage, il est également réalisé la zone de transition 22a de forme extérieure tronconique, qui fait ainsi disparaître la rupture de niveau 44 initialement prévue sur la préforme 32.

Naturellement, ces opérations sont également réalisées de manière identique pour le second élément de bielle 2b.

Enfin, d'autres étapes classiques peuvent ensuite être réalisées, telles qu'un traitement thermique si celui-ci s'avère nécessaire, ou encore un finition mécanique garante de l'interchangeabilité des bielles 1.

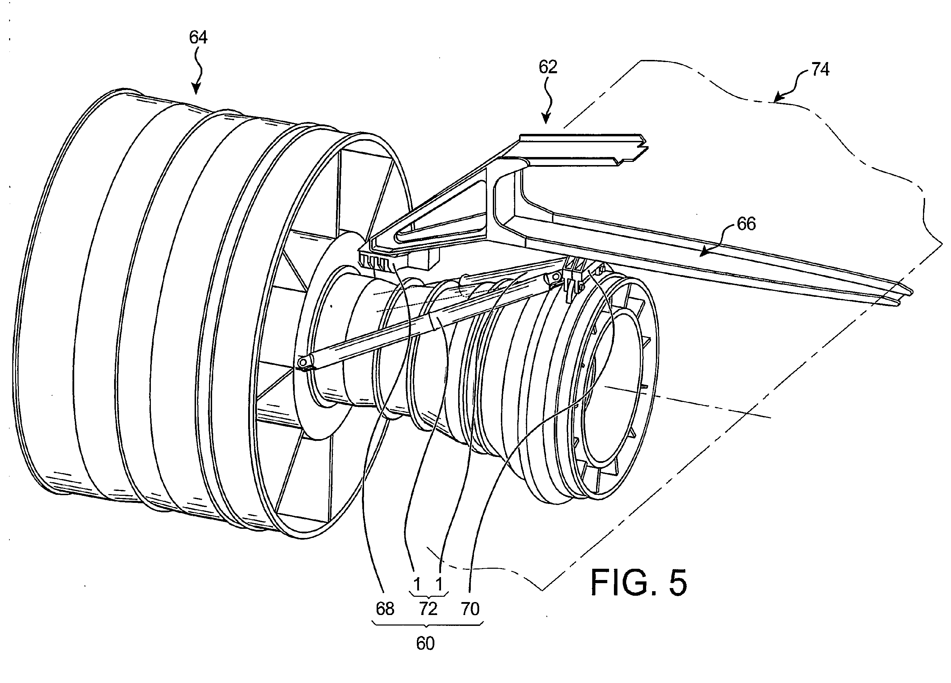

En référence à la figure 5, on peut apercevoir un système de montage 60 interposé entre un mât d'accrochage de moteur d'aéronef 62 et un moteur 64, ce système 60 prenant la forme d'un mode de réalisation préféré de la présente invention.

Comme on peut clairement l'apercevoir sur cette figure 5, le système de montage 60 agencé entre le moteur 64 et une structure rigide 66 du mât d'accrochage 62 comprend de façon conventionnelle et connue de l'homme du métier, une attache avant 68, une attache arrière 70, ainsi qu'un dispositif de reprise des efforts de poussée 72 générés par le moteur 64.

La particularité du système de montage 60 réside donc dans la conception de ce dispositif de reprise des efforts de poussée 72 qui est composé par deux bielles structurales creuses 1 telles que celles qui ont été présentées ci-dessus.

Ces deux bielles 1, également appelées bielles longues et pouvant dépasser une longueur de deux mètres, sont chacune d'une part rattachées à une partie avant d'un carter central du moteur 64, ainsi que sur l'attache arrière 70.

Le système de montage 60 présente un dispositif de reprise des efforts de poussée à bielles courtes, dans lequel ces bielles sont raccordées sur l'attache avant au lieu de l'attache arrière. Aussi, il est bien évidemment précisé que l'application de ce système de montage 60 n'est pas limitée au cas représenté sur la figure 5 où le moteur 64 est destiné à être suspendu sous la voilure 74 de l'aéronef.

Bien entendu, diverses modifications peuvent être apportées par l'homme du métier aux bielles 1, 100, au procédé de fabrication ainsi qu'au système de montage 60 qui viennent d'être décrits, uniquement à titre d'exemples non limitatifs. En particulier, le procédé décrit, et plus spécifiquement son étape de réalisation par fluotournage des premier et second corps creux, peut être adaptée de manière à obtenir une bielle structurale creuse telle que montrée sur la figure 4. De plus, le système de montage pour moteur d'aéronef pourrait aussi être conçu de manière à ce que son dispositif de reprise des efforts de poussée intègre des bielles structurales creuses telles que montrées sur cette figure 4.

## Revendications

1. Procédé de fabrication d'une bielle structurale creuse de reprise des efforts de poussée (1, 100) d'un système de montage (60) destiné à être interposé entre un mât d'accrochage de moteur d'aéronef (62) et un moteur (64), ledit système de montage comprenant une pluralité d'attaches moteur (68, 70) ainsi que des bielles de reprise des efforts de poussée (1, 100) engendrés par ledit moteur (64), chaque bielle (1, 100) comprenant un premier embout (8a) d'accrochage un second embout (8b) d'accrochage ainsi qu'une portion principale creuse (10) située entre les deux embouts (8a, 8b), ladite bielle comprenant un premier et un second éléments de bielle (2a, 2b) raccordés solidairement l'un à l'autre et présentant respectivement un premier corps creux (6a) réalisé d'un seul tenant avec ledit premier embout (8a) ainsi qu'un second corps creux (6b) réalisé d'un seul tenant avec ledit second embout (8b), lesdits premier et second éléments de bielle (2a, 2b) étant raccordés solidairement l'un à l'autre par l'intermédiaire d'une jonction (4) située à mi-longueur de ladite bielle, **caractérisé en ce que** le procédé comporte les étapes suivantes :
- fabrication d'une préforme (32) dudit premier élément de bielle (2a) ainsi que d'une préforme (32) dudit second élément de bielle (2b) ;
- réalisation par fluotournage des premier et second corps creux (6a, 6b), respectivement à partir des deux préformes (32) ; et
- assemblage des premier et second corps creux (6a, 6b) l'un avec l'autre.

2. Procédé de fabrication d'une bielle structurale creuse selon la revendication 1, **caractérisé en ce que** ladite étape d'assemblage des premier et second corps creux (6a, 6b) l'un avec l'autre est réalisée par soudage par friction entre une extrémité de jonction (18a) du premier corps (6a) et une extrémité de jonction (18b) du second corps (6b), lesdites première et seconde extrémités de jonction (18a, 18b) présentant une surépaisseur de matière.

3. Procédé de fabrication d'une bielle structurale creuse selon l'une quelconque des revendications 1 et 2, **caractérisé en ce que** ladite étape de fabrication des deux préformes (32) est réalisée de manière à ce que chacune d'elles présente une surface interne cylindrique (48) dans laquelle peut être inséré un mandrin tournant (54) lors de ladite étape de réalisation par fluotournage des premier et second corps creux (6a, 6b).

4. Procédé de fabrication d'une bielle structurale creuse selon l'une quelconque des revendications 1 à 3, **caractérisé en ce que** ladite étape de réalisation par fluotournage des premier et second corps creux (6a, 6b) à partir des préformés (32) est réalisée de sorte que chacun d'eux dispose d'une surface externe cylindrique (14a, 14b).

5. Procédé de fabrication d'une bielle structurale creuse selon l'une quelconque, des revendications, 1 à 3, **caractérisé en ce que** ladite étape de réalisation par fluotournage des premier et second corps creux (6a, 6b) à partir des préformes (32) est réalisée de sorte que chacun d'eux dispose d'une surface externe non cylindrique (114a, 114b).

6. Procédé de fabrication d'une bielle structurale creuse selon la revendication 5, **caractérisé en ce que** ladite étape de réalisation par fluotournage des premier et second corps creux (6a, 6b) à partir des préformes (32) est réalisée de sorte que chacun d'eux dispose d'une surface externe sensiblement tronconique (114a, 114b).

7. Procédé de fabrication d'une bielle structurale creuse selon l'une quelconque des revendications 1 à 6, **caractérisé en ce que** ladite étape d'assemblage des premier et second corps creux (6a, 6b) l'un avec l'autre est suivie d'une étape de réalisation par usinage desdits premier et second embouts (8a, 8b), lesdits usinages étant pratiqués dans une portion d'embout (38) de chacune desdites préformes (32).

8. Procédé de fabrication d'une bielle structurale creuse selon la revendication 7, **caractérisé en ce que** ladite étape de réalisation par usinage desdits premier et second embouts (8a, 8b) est réalisée de manière à ce que lesdits premier et second éléments de bielle (2a, 2b) présentent chacun une zone de transition (22a, 22b) de forme extérieure tronconique entre le corps creux (6a, 6b) et l'embout concernés (8a, 8b).

9. Procédé de fabrication d'une bielle structurale creuse selon l'une quelconque des revendications 1 à 8, **caractérisé en ce qu'**il comporte pour chacun des deux éléments de bielle (2a, 2b), avant l'étape d'assemblage des premier et second corps creux (6a, 6b) l'un avec l'autre, et de préférence avant l'étape de réalisation par fluotournage des premier et second corps creux (6a, 6b), une étape de réalisation par usinage d'un évidement (52) dans une face latérale interne (50) d'une portion de corps creux (42) de la préforme (32), cette face latérale interne (50) délimitant un espace vide (46) de cette portion de corps creux (42).

10. Procédé de fabrication d'une bielle structurale creuse selon l'une quelconque des revendications 1 à 9, **caractérisé en ce que** lesdites étapes de fabrication des deux préformes (32) sont chacune réalisées à partir d'un élément plein (30) de forme cylindrique.

## Claims

1. Manufacturing method for a hollow structural strut for carrying thrust forces (1, 100) of a mounting system (60) designed to be interposed between an aero engine pylon (62) and an engine (64), said mounting system including a plurality of engine mounts (68, 70) as well as struts for carrying thrust forces (1, 100) generated by said engine (64), each strut (1, 100) including a first securing endpiece (8a), a second security endpiece (8b), as well as a hollow principal portion (10) located between the two endpieces (8a, 8b), said strut having a first and a second strut element (2a, 2b) integrally connected together and exhibiting respectively a first hollow body (6a) made in a single piece with the said first endpiece (8a) as well as a second hollow body (6b) made in a single piece with said second endpiece (8b), said first and second strut element (2a, 2b) being integrally connected together through a junction (4) located at mid-length of said strut, **characterized in that** the method comprises the following steps:
- manufacture of a preforms (32) of said first strut element (2a) as well as a preforms (32) of said second strut element (2b);
- manufacture by flow-forming of the first and second hollow bodies (6a, 6b), respectively from the two preforms (32); and
- assembly of the first and the second hollow bodies (6a, 6b).

2. The manufacturing method for a hollow structural strut according to Claim 1, **characterized in that** said step consisting of assembling the first and the second hollow bodies (6a, 6b) is performed by friction welding between a junction end (18a) of the first body (6a) and a junction end (18b) of the second body (6b), said first and second junction ends (18a, 18b) having an excess thickness of material.

3. The manufacturing method for a hollow structural strut according to any one of Claims 1 and 2, **characterized in that** said step consisting of manufacturing the two preforms (32) is performed in such a manner that each of them exhibits a cylindrical inner surface (48) wherein a rotating mandrel (54) can be inserted during said step consisting of manufacturing first and second hollow bodies (6a, 6b) by flow forming.

4. The manufacturing method for a hollow structural strut according to any one of Claims 1 through 3, **characterized in that** said step consisting of manufacturing of the first and second hollow bodies (6a, 6b) by flow forming from preforms (32) is performed in such a manner that each of them has a cylindrical outer surface (14a, 14b).

5. The manufacturing method for a hollow structural strut according to any one of Claims 1 through 3, **characterized in that** said step consisting of manufacturing the first and second hollow bodies (6a, 6b) by flow forming from preforms (32) is performed in such a manner that each of them has a non-cylindrical outer surface (114a, 114b).

6. The manufacturing method for a hollow structural strut according to Claim 5, **characterized in that** said step consisting of manufacturing the first and second hollow bodies (6a, 6b) by flow forming from preforms (32) is performed in such a manner that each of them has a substantially frusto-conical outer surface (114a, 114b).

7. The manufacturing method for a hollow structural strut according to any one of Claims 1 through 6, **characterized in that** said step consisting of assembling the first and the second hollow bodies (6a, 6b) is followed by a step consisting of manufacturing said first and second endpieces (8a, 8b) by machining, said machining being performed on an endpiece portion (38) of each of said preforms (32).

8. The manufacturing method for a hollow structural strut according to Claim 7, **characterized in that** said step consisting of manufacturing said first and second endpieces (8a, 8b) by machining is performed in such a manner that said first and second strut elements (2a, 2b) each exhibits a transition zone (22a, 22b) with a frusto-conical outside shape between the hollow body (6a, 6b) and the endpiece concerned (8a, 8b).

9. The manufacturing method for a hollow structural strut according to any one of claims 1 through 8, **characterized in that** it includes, for each of the two strut elements (2a, 2b), before the step consisting of assembly of the first and second hollow bodies (6a, 6b), and preferably before the step consisting of manufacturing the first and second hollow bodies (6a, 6b) by flow forming, a step consisting of manufacturing by machining a recess (52) in one inner lateral surface (50) of a hollow body portion (42) of the preform (32), said inner lateral surface (50) defining an empty space (46) of said hollow body portion (42).

10. Manufacturing method for a hollow structural strut according to any one of Claims 1 through 9, **characterized in that** said steps consisting of manufacturing the two preforms (32) are both performed starting with a cylindrically shaped solid element (30).

## Patentansprüche

1. Verfahren zur Herstellung einer Hohlstrukturstange zur Aufnahme von Druckkräften (1, 100) von einem Montagesystem (60), welches dazu bestimmt ist, zwischen einer Flugzeug-Motor-Halterung (62) und einem Motor (64) angeordnet zu werden, wobei das Montagesystem eine Mehrzahl von Motorbefestigungen (68, 70) sowie Stangen zur Aufnahme von Druckkräften (1, 100), umfasst, die von dem Motor (64) erzeugt werden, wobei jede Stange (1, 100) ein erstes Kopplungsendstück (8a), ein zweites Kopplungsendstück (8b) sowie einen hohlen Hauptabschnitt (10) umfasst, der sich zwischen den zwei Endstücken (8a, 8b) befindet, wobei die Stange ein erstes und ein zweites Stangenelement (2a, 2b) umfasst, die fest miteinander verbunden sind und jeweils einen ersten Hohlkörper (6a), der einstückig mit dem ersten Endstück (8a) ausgebildet ist, bzw. einen zweiten Hohlkörper (6b), der einstückig mit dem zweiten Endstück (8b) ausgebildet ist, aufweisen, wobei das erste und das zweite Stangenelement (2a, 2b) fest miteinander vermittels einer Verbindung (4) verbunden sind, welche sich auf mittlerer Länge der Stange befindet, **dadurch gekennzeichnet, dass** das Verfahren die folgenden Schritte umfasst:
- Herstellen einer Vorform (32) von dem ersten Stangenelement (2a) sowie einer Vorform (32) von dem zweiten Stangenelement (2b);
- Herstellen von dem ersten und dem zweiten Hohlkörper (6a, 6b) durch Fließformen, jeweils ausgehend von den zwei Vorformen (32), und
- Zusammenbauen von dem ersten und dem zweiten Hohlkörper (6a, 6b) miteinander.

2. Verfahren zur Herstellung einer Hohlstrukturstange nach Anspruch 1, **dadurch gekennzeichnet, dass** der Schritt des Zusammenbauens von dem ersten und dem zweiten Hohlkörper (6a, 6b) miteinander durch Reibschweißen zwischen einem Verbindungsende (18a) des ersten Körpers (6a) und einem Verbindungsende (18b) des zweiten Körpers (6b) erfolgt, wobei das erste und das zweite Verbindungsende (18a, 18b) eine Material-Überdicke aufweisen.

3. Verfahren zur Herstellung einer Hohlstrukturstange nach einem der Ansprüche 1 und 2, **dadurch gekennzeichnet, dass** der Schritt des Herstellens der zwei Vorformen (32) so ausgeführt wird, dass jede davon eine zylinderische Innenfläche (48) autweist, in welche bei dem Schritt des Herstellens des ersten und des zweiten Hohlkörpers (6a, 6b) durch Fließformen ein rotierender Dorn eingesetzt werden kann.

4. Verfahren zur Herstellung einer Hohlstrukturstange nach einem der Ansprüche 1 bis 3, **dadurch gekennzeichnet, dass** der Schritt des Herstellens von dem ersten und dem zweiten Hohlkörper (6a, 6b) durch Fließformen ausgehend von den Vorformen (32) so ausgeführt wird, dass jeder davon eine zylindrische Außenfläche (14a, 14b) aufweist.

5. Verfahren zur Herstellung einer Hohlstrukturstange nach einem der Ansprüche 1 bis 3, dadurch gekennzeichet, dass der Schritt des Herstellens von dem ersten und dem zweiten Hohlkörper (6a, 6b) durch Fließformen ausgehend von den Vorformen (32) so ausgeführt wird, dass jeder davon eine nicht zylindrische Außenfläche (114a, 114b) aufweist.

6. Verfahren zur Herstellung einer Hohlstrukturstange nach Anspruch 5, dadurch gekennzeichet, dass der Schritt des Herstellens von dem ersten und dem zweiten Hohlkörper (6a, 6b) durch Fließformen ausgehend von den Vorformen (32) so ausgeführt wird, dass jeder davon eine im Wesentlichen kegelstumpfförmige Außenfläche (114a, 114b) aufweist.

7. Verfahren zur Herstellung einer Hohlstrukturstange nach einem der Ansprüche 1 bis 6, dadurch gekennzeichet, dass auf den Schritt des Zusammenbauens von dem ersten und dem zweiten Hohlkörpers (6a, 6b) miteinander ein Schritt des Herstellens von dem ersten und dem zweiten Endstück (8a, 8b) durch Bearbeitung folgt, wobei die Bearbeitungen in einem Endabschnitt (38) von jeder der Vorformen (32) vorgenommen werden.

8. Verfahren zur Herstellung einer Hohlstrukturstange nach Anspruch 7, **dadurch gekennzeichnet, dass** der Schritt des Herstellens von dem ersten und dem zweiten Endstück (8a, 8b) durch Bearbeitung so ausgeführt wird, dass das erste und das zweite Stangenelement (2a, 2b) jeweils einen Übergangsbereich (22a, 22b) mit einer kegelstumpfförmigen äußeren Form zwischen dem Hohlkörper (6a, 6b) und dem betroffenen Endstück (8a, 8b) aufweisen.

9. Verfahren zur Herstellung einer Hohlstrukturstange nach einem der Ansprüche 1 bis 8, **dadurch gekennzeichnet, dass** es für jedes von den zwei Stangenelementen (2a, 2b) vor dem Schritt des Zusammenbauens von dem ersten und dem zweiten Hohlkörper (6a, 6b) miteinander und vorzugsweise vor dem Schritt des Herstellens von dem ersten und dem zweiten Hohlkörper (6a, 6b) durch Fließformen einen Schritt der Herstellung einer Ausnehmung (52) in einer seitlichen Innenfläche (50) von einem Abschnitt des Hohlkörpers (42) der Vorform (32) durch Bearbeitung umfasst, wobei diese seitliche Innenfläche (50) einen leeren Raum (46) von dem Abschnitt des Hohlkörpers (42) abgrenzt.

10. Verfahren zur Herstellung einer Hohlstrukturstange nach einem der Ansprüche 1 bis 9, **dadurch gekennzeichnet, dass** die Schritte der Herstellung der zwei Vorformen (32) jeweils ausgehend von einem vollen Element (30) mit zylindrischer Form ausgeführt werden.
